# EUROPEAN PATENT APPLICATION

(11) **EP 4 386 302 A1**
(43) Date of publication of application: **19.06.2024**
(21) Application number: 22383208.0
(22) Date of filing: 13.12.2022
(51) Int. Cl.: F28D 20/00

(54) **SALT STORAGE TANKS**

(71) Applicant: Fundación Cener, 31621 Sarriguren, Navarra (ES)
(72) Inventor: SÁNCHEZ GONZÁLEZ, Marcelino, 31621 Sarriguren, Navarra (ES); ZAVERSKY, Fritz, 31621 Sarriguren, Navarra (ES); RÁNDEZ DIAGO, Xabier, 31621 Sarriguren, Navarra (ES)
(74) Representative: ABG Intellectual Property Law, S.L.

(57) **Abstract**

The present invention belongs to the technical field of molten salt thermal storage tanks. The invention particularly relates to molten salt storage tanks built with inorganic or ceramic materials combined with solidified salt by means of structures similar to those used in civil engineering.

## Description

### OBJECT OF THE INVENTION

The present invention belongs to the technical field of molten salt thermal storage tanks. The invention particularly relates to molten salt storage tanks built with inorganic or ceramic materials combined with the salt from inside the tank which is filtered and solidified in the structure, built by means of techniques or structures similar to those used in civil engineering.

### BACKGROUND OF THE INVENTION

Currently one of the most common forms of mass energy storage is molten salt storage. These systems are used in concentrating solar power (CSP) plants to store energy at times when there is a surplus of solar radiation (high peak radiation) which is released into the grid when there is an energy deficit (low or no radiation).

These systems are based on the storage of a heat-transfer fluid, usually made up of a mixture of potassium nitrate (KNO₃) and sodium nitrate (NaNO₃) or other ternary and quaternary salts from these or other compounds, in two insulated steel tanks to reduce thermal losses where the salts are stored at different temperatures. A first tank contains the molten salts at a temperature of about 565°C (differing from the degradation temperature of the molten salts by about 40°C) and another tank at about 290°C (about 70°C above the solidification temperature of the salts). During periods of surplus, energy is stored in the tank containing the salts at the higher temperature, while during periods of energy deficit, the salts are circulated from this hot tank, passing through an exchanger that feeds the power cycle to the cold tank, where they arrive having already reduced their energy level and temperature, which have been transferred to said power cycle.

The design of the structure of molten salt storage tanks existing in the state of the art is carried out according to API 650 standard for the design of welded storage tanks for oils, water, or chemicals at pressures below 2.5 PSI (1. 72 bar) and is based on a cylindrical tank made up of a high-quality stainless steel inner tank, typically 316, 321, or 347 stainless steel, an intermediate layer of thermal insulation to reduce thermal losses (around 250KWth per tank) and a metallic cover of lower quality steel, e.g., SA570 or Gr70 steel, which is insulated by the intermediate layer, in addition to a concrete foundation.

Tanks of this type have two major drawbacks: durability and limited size and shape.

The salts used for thermal energy storage, together with the high temperatures at which they must be stored, make them highly corrosive, so high quality steels must be used for the construction of storage tanks. Steels of this type make storage tanks more expensive to manufacture, and they are also subject to periodic maintenance to increase their durability. Although these materials are capable of extending the service life of storage tanks, they are not a definitive solution to the problem, since the highly corrosive environment caused by salts at high temperatures causes the steel to degrade until the tank is out of service, even when the necessary maintenance cycles are carried out.

In addition, this type of tank is limited in size and shape due to the thermal stresses and expansions that the steel withstands due to temperature changes, its dimensions being limited to cylinders of about 40 m in diameter and 15 m in height, dimensions that are insufficient for massive storage applications and that require several tanks in parallel when large amounts of energy are to be stored. This arrangement increases the cost of the system both because of the number of tanks and of the need for a greater number of instrumentation and pumping systems, etc.

The invention proposed herein addresses the problems of molten salt storage tanks existing in the state of the art, providing a solution for the limitations mentioned above.

### DESCRIPTION OF THE INVENTION

The present invention proposes a container for the storage of molten salts according to claim 1, a container for the storage of molten salts comprising molten salts according to claim 2, and a method for the installation thereof according to claim 15. Preferred embodiments of the invention are defined in the dependent claims.

Throughout this document, salt, salts, or mixture of salts shall be understood to mean the heat-transfer fluid used for thermal storage comprised in the container for the storage of molten salts of the invention, typically made up of a mixture of potassium nitrate (KNO₃) and sodium nitrate (NaNO₃) or other ternary and quaternary salts from these or other compounds.

A first inventive aspect provides a *container for the storage of molten salts, comprising a container perimeter, the container perimeter comprising:*
- *a plurality of blocks comprising at least one solid material, said plurality of blocks being arranged such that there is a separation between them;*
- *wherein the blocks are arranged to allow the filtration of part of the molten salts from the inside to the outside of the container by means of the separation between blocks, such that when the container comprises salts, they partially solidify inside the separations due to the temperature difference between the inside and the outside of the container, with the salt acting* as a *binding substance and the blocks being sealed to one another forming a leak-tight container perimeter.*

In a first inventive aspect, the container for the storage of high-temperature molten salts comprises a perimeter comprising a plurality of blocks of at least one solid material arranged with a separation between them.

Advantageously, control over the arrangement and size of the blocks, which can be of uniform or irregular sizes and shapes, allows the molten salts to be filtered, completely or partially occupying the gaps formed by the separations between blocks, advancing from the inside to the outside of the container, with the salts themselves acting as a binding substance once they solidify and therefore creating a leak-tight container perimeter.

The thermal and chemical properties of the salts allow the temperature difference between the inner part (highest temperature) and outer part (lowest temperature) of the container to cause the solidification of said salts when they advance to the outside of the container perimeter through the separations arranged between blocks. Additionally, the volume of the salts is reduced when their temperature drops. Advantageously, these two characteristics facilitate the salts acting as a binding and sealing substance for the container perimeter, which is left leak-tight and configured to contain the rest of the molten salts without causing losses of salts or degradation of the content, which is protected by the solidified salts, preventing costs and labor resulting from repairs and maintenance.

Furthermore, the containers according to this inventive aspect are formed by blocks of at least one solid material arranged with separations adapted to cause the filtration of a substance acting as a binding and/or insulating substance for the perimeter of said container. This substance can be the molten salts themselves stored inside the container. As a result of the use of materials of this type and this construction technique, the salt containers are not limited by the shape and size restrictions of the containers of the state of the art, since both the materials and the manner of arranging them and the substances used for the cohesion thereof better withstand the construction forces in addition to salt corrosion.

In one embodiment of the container for the storage of molten salts, the container perimeter is formed from a single continuous piece comprising a porous material, comprising a plurality of blocks and binding or compacting substances configured for the container perimeter to be continuous and porous with a controlled porosity.

In this embodiment, the structure is formed by a continuous piece of a porous material, with a defined porosity which can be constant or variable along the length and width of the geometry of the perimeter, and it makes up the entire wall of the tank.

Advantageously, in this embodiment the container perimeter is continuous and allows control of both the level and the distribution of the porosity by means of the size and arrangement of the blocks and of the binding or compacting substance used in their construction, which allows the controlled filtration of the salts on the wall by means of the control of the porosity of this material.

A second inventive aspect provides a *container for the storage of molten salts, comprising molten salts stored therein and* a *container perimeter, the container perimeter comprising:*
- *a plurality of blocks comprising at least one solid material, said plurality of blocks being arranged such that there is a separation between them;*
- *wherein the blocks are arranged to allow the filtration of part of the molten salts from the inside to the outside of the container by means of the separation between blocks, such that said salts partially solidify inside the separations due to the temperature difference between the inside and the outside of the container, with the salt acting as a binding substance and the blocks being sealed to one another forming a leak-tight container perimeter.*

In the second inventive aspect, the container for the storage of high-temperature molten salts comprises a perimeter comprising a plurality of blocks of at least one solid material arranged with a separation between them, the container further comprising molten salts therein.

Advantageously, this inventive aspect uses control over the arrangement and size of the blocks, which can be of uniform or irregular sizes and shapes, in addition to including molten salts inside the container once the container construction phase has ended. In this sense, the inside of the container is filled so that the high-temperature molten salts can be filtered by the perimeter thereof, thus completing its structure and creating the final leak-tight perimeter once the salts partially solidify in the gaps of the perimeter.

The properties of the salts allow them to act as a binding and sealing substance for the container perimeter, which is configured to efficiently contain the rest of molten salts held therein, the perimeter further being protected by the solidified salts which, because of their physicochemical properties, combined with those of the rest of the materials making up same (blocks of at least one solid material), allow said perimeter not to degrade, thereby preventing costs resulting from repairs and maintenance.

In one embodiment of the second inventive aspect, the container for the storage of molten salts comprises a perimeter which is formed from a single continuous piece, in turn comprising a porous material comprising a plurality of blocks and binding or compacting substances configured for the perimeter to be continuous and porous with a controlled porosity.

In this embodiment, the structure is formed by a continuous piece of a porous material, with a defined porosity which can be constant or variable along the length and width of the geometry of the perimeter, and it makes up the entire wall of the tank.

Advantageously, in this embodiment the container perimeter is continuous and its level and distribution of porosity can be controlled by means of the size and arrangement of the blocks and of the binding or compacting substance used in their construction, which allows the controlled filtration of the salts by means of the control of the porosity of the perimeter.

In one embodiment of *the container for the storage of molten salts, the container perimeter further comprises:*
- *one or more construction modules arranged with a separation between them, each module comprising a structure configured to maintain the cohesion of the module, each module comprising therein a plurality of blocks, such that a separation occurs between them;*
- *wherein the blocks comprised inside the modules and the modules making up the container perimeter are arranged to allow the partial filtration of molten salts from the inside to the outside of the container by means of the separation between modules and the separation between blocks, such that when the container comprises salts, said salts partially solidify inside said separations due to the temperature difference between the inside and the outside of the container, with the salt acting as a binding substance and the blocks and the modules being sealed to one another forming a leak-tight container perimeter.*

In one embodiment, the container perimeter comprises one or more construction modules arranged such that, in addition to the separation between blocks, a separation between modules is generated. Each module in turn comprises a structure configured to maintain the cohesion of said modules, that is, to keep the plurality of blocks comprised in each module attached.

In addition to control over the arrangement and size of the blocks, which can be of uniform or irregular sizes and shapes, this embodiment also allows control over both the separation between blocks inside the modules and the separation of the modules with respect to one another, being configured to allow the partial filtration of molten salts from the inside to the outside of the container such that the temperature difference between the inside and the outside of the container causes the salts to solidify as said salts are filtered through the separations between blocks and between modules.

Advantageously, this embodiment allows the rapid, simple, and inexpensive construction of modular salt containers, by stacking construction modules which will form the final container. In this case, like in the aforementioned embodiments, the size, shape, and material restrictions in containers for this purpose existing in the state of the art are also prevented, since construction elements of this type comprise materials preventing corrosion. Furthermore, these constructions are configured to eliminate excessive stresses and loads in containers built with high alloy steels that are typically used.

In a particular embodiment, the modules forming the container can be civil engineering blocks. As a result of this type of construction block, the container perimeter can be formed in a rapid, simple, and cost-effective manner, since said blocks have been specifically conceived to facilitate constructions carried out with these blocks.

In one embodiment of *the container for the storage of molten salts, the blocks have irregular shapes.*

In this embodiment, the blocks forming the container perimeter for the storage of molten salts, alone or comprised in modules, have irregular shapes.

Advantageously, this embodiment allows a better filtration of the salts and a better settling of the blocks once solidified.

In one embodiment of *the container for the storage of molten salts, the blocks have regular geometric shapes and are adapted for being grouped together creating uniform layers parallel to the container perimeter such that the spaces between them are adapted for containing an insulating material or fluid or a compacting substance.*

In this embodiment, the blocks forming the container perimeter for the storage of molten salts, alone or comprised in modules, have regular shapes and are adapted for being grouped together uniformly forming the container perimeter, alone or comprised in modules.

In a particular embodiment, the blocks forming the container perimeter for the storage of molten salts are cube- or prism-shaped.

Advantageously, this embodiment allows the blocks to have shapes which facilitate the control over their placement, such that when the container perimeter or the modules containing the blocks is being built, it is easier to control their shape, as well as the shape and size of the separations between modules and/or blocks, thereby enhancing the desired properties on the perimeter.

To enable control over the shape and size of the separations between blocks and/or modules comprised in the container perimeter, it also allows the blocks and/or the modules to be arranged with a configuration which allows said separations to hold different types of insulating materials or fluids and/or compacting substances.

Advantageously, this embodiment first allows control over the filtration of the salts so that they can occupy specific spaces between blocks and/or modules and, secondly, control over the thermal insulation in the container perimeter, thereby controlling the specific solidification point of the salts in the container perimeter.

The blocks and/or modules of the perimeter can thereby be organized such that spaces comprising insulating materials or fluids and/or compacting substances can be alternated with other spaces comprising salts or the salts themselves can be used as a binding or insulating substance.

In one embodiment of *the container for the storage of molten salts, the blocks are refractory bricks.*

In this embodiment, the blocks comprised on the perimeter of the molten salt storage tank or in the modules thereof are refractory bricks.

Advantageously, the use of refractory bricks as blocks allows all the advantages brought about by the blocks with regular geometric shapes to be preserved, and furthermore allows an increased control over the thermal variation taking place between the inner part and the outer part of the container perimeter due to the thermal properties of the refractory bricks.

In one embodiment of *the container for the storage of molten salts, the refractory bricks have openings configured to contain an insulating material or fluid or a compacting substance.*

In this embodiment, the refractory bricks comprise openings configured to contain an insulating material or fluid or a compacting substance.

This embodiment has the advantage of increasing control over the composition of the container perimeter, since it increases the amount of surface that can be filled therein whether for increasing the cohesion of the perimeter itself or of the modules comprising the bricks, as well as for increasing the volume or surface used as an insulating substance to control the thermal properties of the container perimeter by increasing or decreasing the amount of insulating substance that is introduced.

In one embodiment of *the container for the storage of molten salts, the structure is a metal mesh.*

In this embodiment, the structure maintaining the cohesion of the construction modules comprised in the container perimeter is a mesh made of a metallic material.

This embodiment has the advantages of allowing greater control and flexibility in the formation of the modules, since different shapes could be imparted to said modules and certain freedom for placing the blocks therein could be allowed. It further allows a considerable improvement in manufacturing costs.

This embodiment additionally has the advantage of the blocks having a higher permeability to fluids, insulating and/or compacting substances or of the molten salts going through the modules with greater freedom, allowing the formation of a perimeter by grouping several modules together in the horizontal direction to increase the width of the container perimeter.

In a particular embodiment, the modules comprised in the container perimeter are gabions.

In one embodiment of *the container for the storage of molten salts, the structure comprises blocks arranged such that they form a perimeter of the module to contain the rest of the blocks thereof.*

In this embodiment, the modules forming the container in turn comprise a perimeter formed by blocks of the same type as that comprised inside the modules, configured to give shape and maintain the cohesion of said modules acting as a perimeter thereof and maintaining inside the module the blocks needed for the support thereof.

Advantageously, this embodiment does not require materials in addition to the blocks themselves for building the blocks, helping to reduce costs and facilitate their construction.

In one embodiment of *the container for the storage of molten salts, the at least one solid material comprised in the blocks is inorganic, ceramic, solidified salt, gravel, limestone, or refractory material.*

In this embodiment, the blocks comprised on the perimeter and/or modules of the salt storage tank comprise at least one solid material which can be inorganic, ceramic, solidified salt, gravel, limestone, or refractory material.

Advantageously, the chemical properties of these materials make them resistant to corrosion and suitable for use together with a type of binding, compacting, and/or insulating substance in the construction of a container for the storage of molten salts. This improves the structural resistance of the container, reducing maintenance, repair, and material replacement costs.

Furthermore, this type of construction is more resistant to the forces to be withstood by the structure forming a container for the storage of molten salts.

In one embodiment of *the container for the storage of molten salts, the perimeter comprises a plurality of layers of blocks or modules arranged such that there is a space between them configured to contain an insulating material or fluid or a compacting substance.*

In this embodiment, the container perimeter comprises a plurality of layers formed by blocks and/or modules forming the container perimeter, configured for there to be a space between layers in which an insulating material or fluid or a compacting substance can be introduced.

Advantageously, this configuration of the blocks and/or modules on the container perimeter allows even greater control over the properties thereof, controlling by layers the materials introduced and calculating, with the thermal and chemical properties thereof, that the desired effects in the molten salts contained in the container are achieved.

In one embodiment of *the container for the storage of molten salts, the insulating material or fluid comprises a material selected from the following list: air, sand, salt, mixture of salts, mortar, or a combination thereof, and the compacting substance comprises a material selected from the following list: sand, salt, mixture* of *salts, mortar, or a combination thereof.*

In this embodiment, an insulating material or fluid which can comprise air, sand, salt, mixture of salts, mortar, or a combination thereof, and/or a compacting substance which can comprise sand, salt, mixture of salts, mortar, or a combination thereof, can be introduced in the spaces between modules, blocks, or layers.

Advantageously, this embodiment allows control over the composition of the materials or the substances/fluids introduced in the spaces between blocks, modules, and/or layers in order to have greater control over the chemical and thermal properties thereof.

In one embodiment of *the container for the storage of molten salts, the container comprises a removable lid or cover configured so as not to come into contact with the content of the container, said lid or cover comprising a material different from the rest of the components making up the container perimeter.*

In this embodiment, the container comprises a removable lid or cover of one or more pieces configured so as not to come into contact with the content of the container, i.e., with the molten salts. For this reason, the lid or cover can comprise materials different from those comprised by the container perimeter, because as they do not come into contact with the salts, they do not need to be resistant to corrosion, in addition to not needing to withstand the weight of the structure.

Advantageously this embodiment allows access to the inside of the container perimeter in order to, for example, introduce and/or extract part of the content, perform maintenance tasks, etc. In addition, as it may be a material with lower structural and corrosion resistance, as it does not come into contact with the salts or withstand the forces applied to the structure, a more cost-effective material which allows the total cost of the container to be reduced can be used.

In a particular embodiment, the lid or cover is formed by a single piece.

In a particular embodiment, the lid or cover is formed by a plurality of pieces.

In one embodiment of *the container for the storage of molten salts, the upper part of the container perimeter comprises a non-insulating material.*

In this embodiment, the container perimeter comprises a removable lid or cover comprising a non-insulating material.

Advantageously, this embodiment helps to reduce manufacturing costs, as it is not necessary for the lid or cover to be configured to withstand contact with corrosive substances or to withstand the forces of the structure.

A third inventive aspect provides *an installation of the container for the storage of molten salts according to any of the embodiments of the first or second inventive aspect, wherein the container is underground or semiunderground.*

In this inventive aspect, an installation of the container for the storage of molten salts in which the container perimeter is located underground or semiunderground is provided.

This form of installing the container provides three technical advantages with respect to conventional tanks. First, safety is increased, because if the molten salts leak out, they would be contained in the gap or cavity in which the container has been placed underground or semiunderground. Secondly, the robustness and durability of the structure is increased, since the container perimeter will be reinforced by way of foundations with the walls of the cavity in which it has been placed underground, thus increasing its resistance to the forces to be withstood by the structure, in addition to being corrosion resistant because the materials making up the walls of the opening are inert. Finally, manufacturing costs of the container are reduced, savings can be made in binding and/or compacting materials because part of the cohesion will be due to the pressure of the perimeter of the opening contained in the container.

In one embodiment of *the installation of a container for the storage of molten salts, the perimeter is formed at least partially by the walls of a cavity in which the container is located underground or semiunderground.*

In this embodiment, the container perimeter is at least partially made up of the walls of a cavity in which said cavity is located underground or semiunderground.

Advantageously, this embodiment allows cost savings in terms of construction materials (blocks, modules, binding substances, compacting substances, insulating substances, etc.) in addition to increasing the durability and robustness of the container perimeter, since the chemical and structural properties of the inert materials making up the walls of the cavity allow the thermal and structural properties of the container to be maintained.

### DESCRIPTION OF THE DRAWINGS

These and other features and advantages of the invention will become more apparent from the following detailed description of a preferred embodiment, given only by way of illustrative and non-limiting example in reference to the attached figures.
- Figure 1: This figures shows an embodiment of the container for the storage of molten salts of the invention according to a first inventive aspect;
- Figure 2: This figures illustrates an embodiment of the container for the storage of molten salts in which the blocks have irregular shapes, the modules are of different sizes, and the structure is a metal mesh;
- Figure 3: This figure illustrates a particular embodiment in which the modules with geometric shapes forming the container perimeter are grouped together forming layers parallel to the perimeter.
- Figure 4: This figures shows an embodiment of the semiunderground container for the storage of molten salts comprising a lid or cover.
- Figure 5: This figures shows an embodiment of the molten salt container according to an embodiment of the invention comprising a perimeter formed by a single piece and a lid or cover.

### DETAILED DISCLOSURE OF THE INVENTION

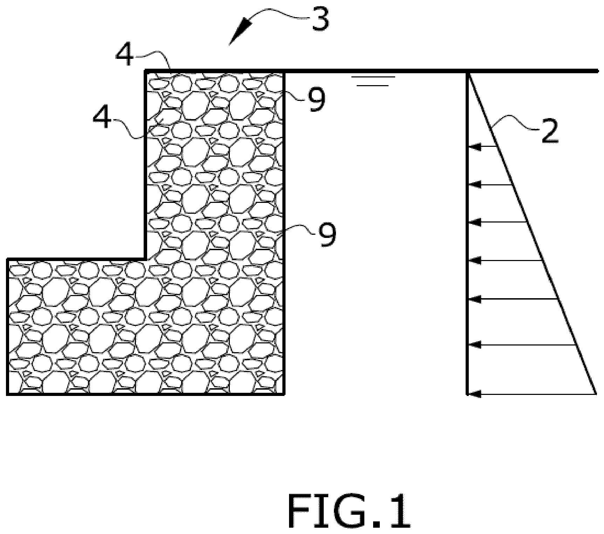

Figure 1 shows an illustrative embodiment of the container (1) for the storage of molten salts (2) according to a first inventive aspect in which the container (1) for the storage of molten salts (2) comprises a perimeter (3) formed by a plurality of blocks (4) of at least one solid material which are arranged such that there is a separation (9) between them, configured to allow the perimeter (3) to be porous, i.e., the salts (2) to be filtered at least partially by said perimeter (3). The filtered salts solidify due to the temperature change, said temperature being lower in the outer part of the perimeter (3), filling in the porous separations (9) and finally forming the leak-tight container perimeter (3). The arrows on the right in Figure 1 represent the molten salts (2) contained inside the container (1) and their path from the inside to the outside of the container (1), part of said salts being filtered by the separations (9) forming the porous parts of the perimeter (3) of the container (1). The length of the arrows represents the pressure exerted by the salts, which increases proportionally to the depth of the container.

In this example, the perimeter (3) of the container (1) is built in a single piece formed by a cluster of blocks (4), the size and shape of which can be variable, which can be attached to other substances forming a porous perimeter (3) which advantageously allows the molten salts (2) stored in the container (1) to be filtered from the inside to the outside, where they will solidify due to the temperature change existing between the inside and the outside of the container (1).

In this embodiment, a concrete-like substance, in which medium-sized stones and other binding substances which allow the configuration thereof with separations (9) are used as blocks (4), is used for the formation of the perimeter (3).

In other embodiments, the blocks (4) used can be of other sizes comprising from very small stones to rocks or other compact blocks (4) formed by at least one solid material which can be mixed with other binding substances forming a porous perimeter (3) of the container (1).

The construction of the container (1) for the storage of molten salts (2) using blocks (4) and construction substances of this type allows the size and shape restrictions on containers in the state of the art to be eliminated, since their physical properties and the manner in which they are built confer to them a higher loading capacity that allows them to withstand the forces to which structures of this type are to be subjected. Furthermore, the chemical properties of the materials used cause them to be naturally more resistant to the corrosion caused by the molten salts, preventing the structure from deteriorating with use, greatly reducing manufacturing costs, since these materials are more cost-effective, as well as container maintenance and repair costs.

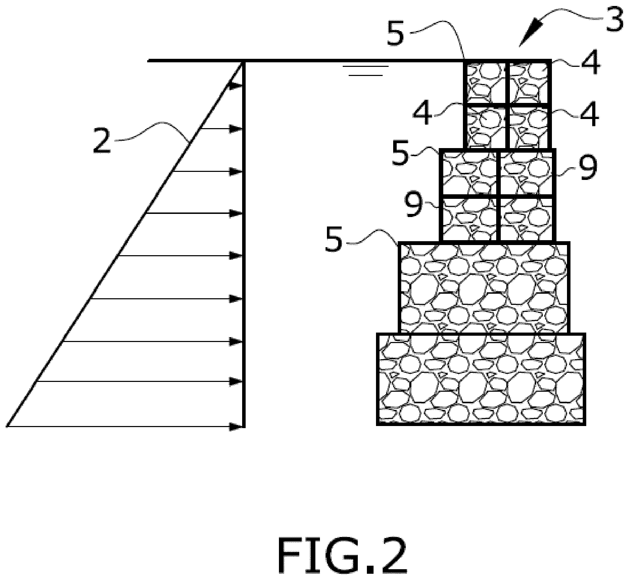

Figure 2 shows an embodiment of the container (1) for the storage of molten salts (2) in which there can be observed a vertical section view of the container perimeter (3) comprising several modules (5) of different sizes, which in turn comprise a structure (6), formed in this case by a metal wire mesh, and a plurality of blocks (4) of irregular shapes contained by said mesh.

In Figure 2, like in Figure 1 but this time on the left of the figure, a group of arrows representing the molten salts (2) contained inside the container (1) and their path from the inside to the outside of the container (1) can be observed, part of said salts being filtered by the separations (9) forming the porous parts of the perimeter (3) of the container (1). The length of the arrows represents the pressure exerted by the salts, which increases proportionally to the depth of the container.

In this embodiment, the container perimeter (3), is formed by modules (2) with geometric shapes, which allows them to be arranged on top of and next to one another, forming the sides of the perimeter (3) of the container (1). The modules (5) are arranged creating separations (10) between them. Said separations (10) are configured to hold an insulating material or fluid or a compacting substance which allows keeping the perimeter (3) assembled, in addition to making it leak-tight and improving the insulation thereof. Said separations (10) can be filled in during construction of the container (1) or be kept empty until the container is put into operation in order for the molten salts (2) themselves from the inside to be filtered, filling same and then become part of the perimeter (3) of the container (1), in which they will act as an insulating and compacting substance.

The modules (5) making up the perimeter (3) of the container (1) remain cohered as a result of the structure (6) formed in this embodiment by a metal mesh which keeps a plurality of the blocks (4) therein. This structure (6) maintains the shape and distribution of the modules (5) of the perimeter (3) of the container (1) while at the same time favors the filtration of insulating and/or compacting substances or fluids through the modules (5). This is additionally a simple and low-cost solution which helps to reduce the manufacturing costs of containers (1) for the storage of molten salts (2).

Each module (5) comprises a plurality of blocks (4) arranged with separations (9) between them configured to allow the filtration of insulating and/or compacting substances and/or fluids. Said blocks (4) remain contained by the metal mesh structure (6) which keeps the assembly cohered. The blocks (4) are formed by at least one solid, preferably inert material, such as gravel, limestone, or refractory material and have irregular shapes.

Advantageously, the composition of the blocks (4) favors the robustness of the container (1), since inert materials exhibit a high resistance to the forces to be withstood by the structure of the container (1), in addition to increasing their resistance to the corrosion caused by the salts (2) held therein. This helps to reduce both manufacturing and repair and maintenance costs. Furthermore, the irregular shape of the blocks (4) of this embodiment favors the configuration of the separations (9) for the filtration of insulating and/or compacting fluids introduced during construction or by the filtration of the molten salts (2) themselves from inside the container (1) after it is started up, which will fill in the separations (9), keeping the perimeter (3) of the container (1) attached, leak-tight, and insulated from the outside. Additionally, the properties of the salts (2) mean that when filtered from the inside of the container (1), where the temperature is higher, towards the outside, where the temperature is lower, by the separations (9) between blocks (4) and the separations (10) between modules (5), said salts solidify, enhancing the insulation and compaction of the perimeter (3) of the container (1).

Furthermore, both the materials and the techniques used allow for greater robustness in the container (1), since the materials and their form of construction cause the perimeter (3) to be capable of withstanding a larger number of loads due to forces and structural stresses than if the materials used in their construction were the conventional high alloy steels in the state of the art. Advantageously, these characteristics allow for greater freedom in designing the container (1), since its greater robustness allows the size and shape limitations of conventional containers to be prevented.

Lastly, the construction materials and techniques used in this embodiment of the container (1) for the storage of molten salts (2) allow manufacturing costs to be reduced, since the materials are much less expensive and easier to handle, for example by stacking inert materials which are attached by means of a binding substance instead of making complex welds in high alloy steels. Furthermore, the inert materials are perfect for this task, since their chemical properties confer high corrosion resistance, thus prolonging the service life of the container, making it safer and preventing maintenance and repair costs.

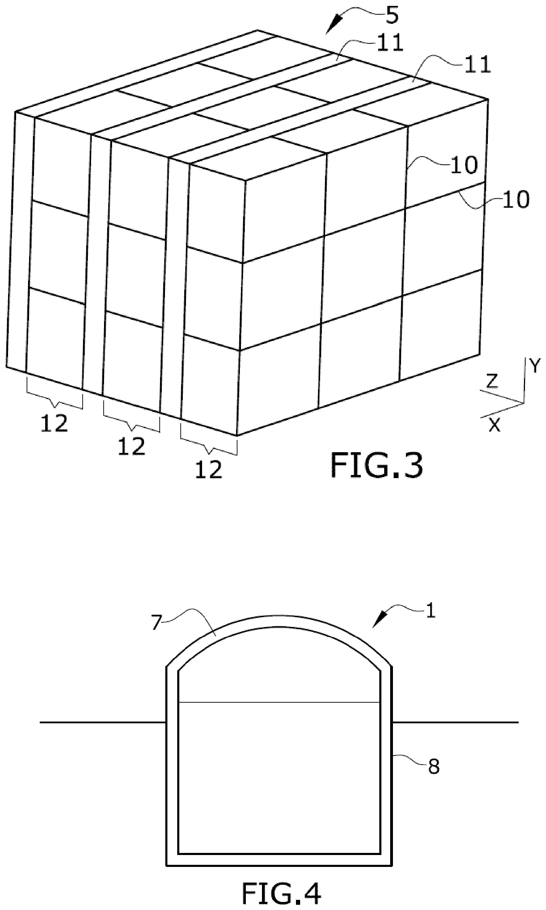

Figure 3 shows an embodiment of the container perimeter (3) comprising a plurality of layers (12) of modules (5) arranged such that a separation (11) configured to contain an insulating material or fluid or a compacting substance is formed between them.

Specifically, this embodiment comprises three layers (12) of modules (5) with geometric shapes arranged such that a separation (10) configured to contain an insulating material or fluid and/or compacting substance is created between them, for example, so that they can be filled in by the filtration of the salts (2) when the container (1) is operative.

In this case, the modules (5) have been represented as a solid piece for the sake of greater simplicity of the example, but it can comprise a plurality of blocks (4) according to any of the embodiments of the invention.

The modules (5) have been arranged in this embodiment uniformly, such that each layer (12) and each separation (11) are horizontally parallel to the container perimeter (3) and equal to one another. In other embodiments, the arrangement of the blocks (4) and/or modules (5) so as to create layers (12) and separations (9, 10, 11) with specific shapes and sizes that improve the properties of the container (1) can be chosen.

A final, thinner layer formed by blocks (4) and/or modules (5) configured for sealing the entire outer surface of the container perimeter (3) in a leak-tight manner has been placed in the outermost part of the container perimeter (3). This final layer is arranged as a safety measure, such that in the event of material leaking out, this layer would prevent it.

The separations (11) are configured to create areas which enhance the insulation between the inside and the outside of the container (1), both in terms of temperature and in terms of tightness. In addition to being able to act as a binding substance, these layers (12) enhance the capability of the container (1) to maintain the temperature difference between the inside and the outside of the container (1), in addition to acting as a compacting substance. As a result of these separations (11), the design of the container perimeter (3) can be configured in different ways to control the filtration of salts (2) such that said salts solidify at a specific point of the width of the perimeter (3).

Advantageously, configurations by layers (12) similar to those of the embodiment of Figure 3 allow the designer of the container (1) to maintain a much broader control over the characteristics thereof, modifying the number and materials, and width of the layers (12) and separations (11), and alternating them as suited to achieve the necessary properties. It is also possible to play with the combination of different insulating materials or fluids or compacting substances contained in the separations (9, 10, 11) so as to achieve different melting points of the salts (2) when they are filtered by said separations (9, 10, 11) towards the outside of the container (1).

Figure 4 shows a container (1) installed according to the third inventive aspect, in which the container (1) according to an embodiment of the invention is completely or partially located underground in a cavity (8) in the ground. In this embodiment, the container (1) also has a lid or cover (7) comprising a non-insulating material, since it will not come into contact with the molten salts (2) inside said container.

In the embodiment of the third inventive aspect of the container (1) in Figure 4, the container perimeter (3) is formed by the modules (5) comprising blocks (4) and furthermore by the walls of the cavity (8) in which said container is located semiunderground.

This method of installing the container (1) has the advantage of being able to use less material to form the container perimeter (3), maintaining the same properties as in other embodiments, since the perimeter is reinforced with the walls of the cavity (8), which help to maintain the cohesion of the container and reinforce it.

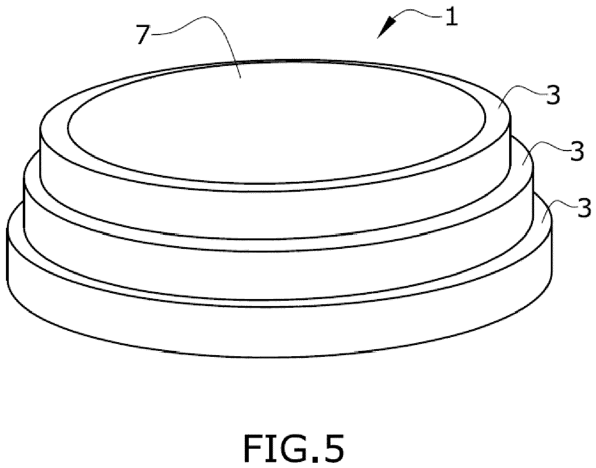

Figure 5 shows an embodiment of the invention in which the container (1) for the storage of molten salts (3) comprises a perimeter (3) of a continuous single piece comprising a plurality of small sized blocks (4) in addition to an insulating material or fluid and/or binding substance arranged with a separation between them, creating a porous perimeter with a controlled porosity.

In other embodiments, the blocks (4) can be of different shapes and sizes, contributing to the control over the porosity of the perimeter (3) as a result of the planning of the design of the perimeter (3), including the arrangement, size, and shape of said blocks (4) for organizing the porosity in the structure of the perimeter (3), which can be uniform or variable in different parts of same. Said porosity allows the molten salts (3) to be completely or partially filtered, occupying the gaps formed by the separations between blocks, advancing from the inside to the outside of the container (1), causing the salts themselves (or the insulating material or fluid or compacting substance used) to solidify, creating a leak-tight container perimeter (3).

In addition, in the embodiment shown in Figure 5 it can also be observed that the container (1) comprises a removable lid or cover (7) which allows access to the inside of the container (1).

## Claims

1. Container (1) for the storage of molten salts (2), comprising a container perimeter (3), the container perimeter (3) comprising:
- a plurality of blocks (4) comprising at least one solid material, said plurality of blocks (4) being arranged such that there is a separation (9) between them;
- wherein the blocks (4) are arranged to allow the filtration of part of the molten salts (2) from the inside to the outside of the container (1) by means of the separation (9) between blocks (4), such that when the container (1) comprises salts (2), they partially solidify inside the separations (9) due to the temperature difference between the inside and the outside of the container (1), with the salt acting as a binding substance and the blocks being sealed to one another forming a leak-tight container perimeter (3).

2. Container (1) for the storage of molten salts (2), comprising molten salts (2) stored therein and a container perimeter (3), the container perimeter (3) comprising:
- a plurality of blocks (4) comprising at least one solid material, said plurality of blocks (4) being arranged such that there is a separation (9) between them;
- wherein the blocks (4) are arranged to allow the filtration of part of the molten salts (2) from the inside to the outside of the container (1) by means of the separation (9) between blocks (4), such that said salts partially solidify inside the separations (9) due to the temperature difference between the inside and the outside of the container (1), with the salt acting as a binding substance and the blocks being sealed to one another forming a leak-tight container perimeter (3).

3. Container (1) for the storage of molten salts (2) according to claim 1 or 2, wherein the container perimeter (3) further comprises:
- one or more construction modules (5) arranged with a separation (10) between them, each module (5) comprising a structure (6) configured to maintain the cohesion of the module (5), each module (5) comprising therein a plurality of blocks (4), such that a separation (9) occurs between them;
- wherein the blocks (4) comprised inside the modules (5) and the modules (5) making up the container perimeter (3) are arranged to allow the partial filtration of molten salts (2) from the inside to the outside of the container by means of the separation (10) between modules (5) and the separation (9) between blocks (4), such that when the container (1) comprises salts (2), said salts (2) partially solidify inside said separations (9, 10) due to the temperature difference between the inside and the outside of the container (1), with the salt (2) acting as a binding substance and the blocks (4) and the modules (5) being sealed to one another forming a leak-tight container perimeter (3).

4. Container (1) for the storage of molten salts (2) according to any of the preceding claims, wherein the blocks (4) have irregular shapes.

5. Container (1) for the storage of molten salts (2) according to any of claims 1, 2, or 3, wherein the blocks (4) have regular geometric shapes and are adapted for being grouped together creating uniform layers (12) on the container perimeter (3) such that the spaces (10) between them are adapted for containing an insulating material or fluid or a compacting substance.

6. Container (1) for the storage of molten salts (2) according to any of claims 1, 2, 3, or 5, wherein the blocks (4) are refractory bricks.

7. Container (1) for the storage of molten salts (2) according to claim 6, wherein the refractory bricks have openings configured to contain an insulating material or fluid or a compacting substance.

8. Container (1) for the storage of molten salts (2) according to claim 3, wherein the structure (6) is a metal mesh.

9. Container (1) for the storage of molten salts (2) according to claim 3, wherein the structure (6) comprises blocks (4) arranged such that they form a perimeter (5.1) of the module (5) to contain the rest of the blocks (4) thereof.

10. Container (1) for the storage of molten salts (2) according to any of the preceding claims, wherein the at least one solid material comprised in the blocks (4) is inorganic, ceramic, solidified salt, gravel, limestone, or refractory material.

11. Container (1) for the storage of molten salts (2) according to any of the preceding claims, wherein the perimeter (3) comprises a plurality of layers (12) of blocks (4) or modules (5) arranged such that there is a space (11) between them configured to contain an insulating material or fluid or a compacting substance.

12. Container (1) for the storage of molten salts (2) according to any of claims 5 to 11, wherein the insulating material or fluid comprises a material selected from the following list: air, sand, salts, mixture of salts, mortar, or a combination thereof, and the compacting substance comprises a material selected from the following list: sand, salts, mixture of salts, mortar, or a combination thereof.

13. Container (1) for the storage of molten salts (2) according to any of the preceding claims, wherein the container (1) comprises a removable lid or cover (7) configured so as not to come into contact with the content of the container (1), said lid or cover (7) comprising a material different from the rest of the components making up the container perimeter (3).

14. Container (1) for the storage of molten salts (2) according to claim 13, wherein the removable lid or cover (7) of the container (1) comprises a non-insulating material.

15. An installation of the container (1) for the storage of molten salts (2) according to any of the preceding claims, wherein the container (1) is underground or semiunderground.

16. The installation of a container (1) for the storage of molten salts (2) according to claim 15, wherein the container perimeter (3) is formed at least partially by the walls of a cavity (8) in which the container (1) is located underground or semiunderground.
